(19) Europäisches Patentamt
European Patent Office
Office européen des brevets

(11) EP 1 488 076 B1

(12) **EUROPEAN PATENT SPECIFICATION**

(45) Date of publication and mention of the grant of the patent:
**13.07.2016 Bulletin 2016/28**

(21) Application number: **03721490.5**

(22) Date of filing: **28.03.2003**

(51) Int Cl.:
***F01D 5/02*** *(2006.01)* ***G01M 1/38*** *(2006.01)*
***A61C 1/05*** *(2006.01)*

(86) International application number:
**PCT/US2003/009583**

(87) International publication number:
**WO 2003/083266 (09.10.2003 Gazette 2003/41)**

(54) **METHOD FOR BALANCING THE ROTATING TURBINE ELEMENT OF A DENTAL HANDPIECE**

VERFAHREN ZUM AUSWUCHTEN DES ROTIERENDEN TURBINENELEMENTS EINES DENTALEN HANDSTÜCKS

PROCÉDÉ D'EQUILIBRAGE D'ELEMENTS ROTATIFS DE TURBINE SUR UN INSTRUMENT DENTAIRE

(84) Designated Contracting States:
**CH DE FR GB IT LI SE**

(30) Priority: **28.03.2002 US 368269 P**

(43) Date of publication of application:
**22.12.2004 Bulletin 2004/52**

(73) Proprietor: **DENTSPLY International Inc.**
**York, PA 17405-0872 (US)**

(72) Inventors:
- **HE, Lu**
  **Woodridge, IL 60517 (US)**
- **NOVAK, Eugene, J.**
  **Deerfield, IL 60015 (US)**

(74) Representative: **Hartz, Nikolai**
**Wächtershäuser & Hartz**
**Patentanwaltspartnerschaft mbB**
**Weinstrasse 8**
**80333 München (DE)**

(56) References cited:

| | |
|---|---|
| **WO-A-01/86130** | **GB-A- 847 262** |
| **US-A- 2 474 883** | **US-A- 4 277 976** |
| **US-A- 4 864 859** | **US-A- 5 214 585** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 488 076 B1

## Description

TECHNICAL FIELD

The method of the present invention are used with dental high-speed handpieces, such as the commercial available handpiece, Midwest XGT. The invention also has benefits in low-speed handpieces, high-speed attachments, or high-speed dental electric motors. The invention provides a method for balancing the rotating elements of such handpieces.

BACKGROUND OF THE INVENTION

Audible sound levels in air-turbine dental high-speed handpieces are often from 65 to 78 dBA. This noise level is a primary complaint of users. It is believed that imbalance of the rotating elements is one of the sources of this noise. Imbalance existing in the rotating portion of a dental turbine set creates centrifugal force when the turbine set starts to rotate, and serves as a source of vibration. (The "set" is the turbine, shaft, and bearing assembly.) For a given suspension system and a rotational speed, the vibration amplitude of the turbine set in its radial direction is proportional to the amount of imbalance.

Dental handpieces are well known in the art. For example, U.S. Pat. Nos. 5,040,980, 4,382,790 and 4,020,556 all disclose such handpieces.

The centrifugal force on a turbine set increases as the imbalance level increases. This centrifugal force becomes a radial load for the set ball bearings during free running (no-load) operation, and is superimposed on external loads during use. A larger centrifugal force certainly results in a larger equivalent bearing radial load while all other force components remain constant. It was well known that the fatigue life of a ball bearing is inversely proportional to its equivalent radial load to the third power. It means that the fatigue life of the ball bearing is reduced as the imbalance and therefore radial load increases.

For the typical dental handpiece set, the length scale (without tool or bur) in the rotation axis direction is approximately the same as that in the radial direction. Therefore, the distribution of unbalanced mass in the turbine set generates not only a static imbalance but also a couple imbalance.

Current practice in the manufacture of dental handpieces is to correct only the static imbalance of the turbine set, regardless of couple imbalance. This method is simple in that one only needs to correct static imbalance in one plane whose location is dependent on the mass center of turbine set. Typically, manufacturers remove material from the turbine. The disadvantage of the current method is that the couple imbalance can remain large and exert excessive centrifugal force on both bearings, leading to large amplitude of vibration of the turbine set, noise and reduced bearing life.

The improved method and apparatus of the present invention is to reduce both static and couple imbalance on burtube/rotor assembly to an acceptable level by reducing the imbalance levels on two correction planes to a desired value.

It is believed that to date, such balancing method for a dental handpiece, or for dynamic balancing in other applications such as turbine engines, disc drives, gyroscopes and other such high speed rotating machinery, has not been known.

SUMMARY OF THE INVENTION

In the present invention, two correction planes are perpendicular to the rotation axis of the burtube. One correction plane intersects the burtube near the bur end, while the other plane intersects the burtube near the cap end.

Also according to the invention, a method of balancing the rotating turbine set elements in a dental handpiece having rotating bur tube having a rotation axis, the bur tube having a bur receiving end and an opposite cap end, comprises the steps of measuring the imbalance in the rotating elements; adding or removing material from at least two correction planes in the turbine set at an angular location measured during the imbalance measurement; and, if necessary, repeating said steps of measuring and removing until a predertermined balance is achieved; wherein said two correction planes are perpendicular to the rotation axis of the burtube, and wherein a first said of said two correction planes intersects the bur tube near the bur end, and a second of said two correction planes intersects the bur tube near the cap end. This method can include measuring for both static imbalance and couple imbalance; wherein said step of material removal at least partially corrects each of said static imbalance and said couple imbalance.

BRIEF DESCRIPTION OF THE DRAWINGS

Fig. 1 is a graphic representation of imbalance in a rotating element set, being the superposition of imbalances on two correction planes which are separated by a fixed distance along the rotation axis.

Fig. 2 is a graphi representation as in Fig. 1, showing the superposition of static imbalance and couple imbalance in such a set.

A commercially available imbalance measurement system, is shown in Figure 3, of the type that has been used to determine amount of imbalances on two correction planes as well as static and couple imbalances for the burtube/rotor assembly. The measurement system consists of a control panel, monitor, measurement nest, air-driving nozzle, and optical pick-up. Such balance measurement systems are available from American Hoffman and Schenk AG, for example.

Fig. 4 shows an inventive apparatus for carrying out the method of the present invention, and includes a material removal fixture that consists of an angular location display, material removal table, and on/off control switch.

Figure 5 illustrates a dental burtube/rotor assembly with material removed from two correction planes.

PREFERRED EMBODIMENTS FOR CARRYING OUT THE INVENTION

The imbalance of a dental turbine set can be presented in two different but mathematically equivalent views. The imbalance is the superposition of imbalances on two correction planes which are separated by a fixed distance along the rotation axis, as shown in Fig. 1, in which

$$\text{imbalance on plane } 1 = M1 \times R1$$

$$\text{imbalance on plane } 2 = M2 \times R2$$

In the present invention, the two correction planes are perpendicular to the rotation axis of the burtube. One correction plane intersects the burtube near the bur end, while the other plane intersects the burtube near the cap end. As shown in Fig. 5, a bur tube 10 has had such balance corrections made at a first correction plane 12 and a second correction plane 11. A timing mark 13 may be included.

The imbalance is the superposition of static imbalance and couple imbalance, as shown in Fig. 2 in which

$$\text{static imbalance} = M \times R$$

$$\text{couple imbalance} = m \times r \times L$$

The current two-plane balancing method involves two steps: imbalance measurement and material removal. After its imbalances are measured, the dental turbine set will be mounted on the material removal fixture. Material is removed from each of the correction planes at the angular location measured during the imbalance measurement. These two steps are carried out one after the other until the imbalances on the two correction planes reach an acceptable level of static and couple imbalance.

There are other methods of balancing:

Balancing of turbine sets to correct both static and couple imbalances. The end result of this method is same as that of two-plane balancing.

However, this method will remove (or add) material from three different locations along the axis of a dental turbine set. The material is removed (or added) from a middle location to reduce static imbalance only, and from two ends to reduce couple imbalance only.

Balancing to optimize the phase angle relationship between the static imbalance and the couple imbalance.

Various target levels of balance (eg "less than 1 mg-mm of static imbalance").

Various combinations of the above balancing methods.

Methods in which material is removed from, or material is added to, various locations on the burtube-rotor assembly in various combinations to achieve one of the above balancing combinations.

Improved bearing life, as shown in life test commercially available handpieces with conventional bearing.

The invention improves bearing life in a dental handpiece, as shown in TABLE 1.

It should be apparent therefore, that the present invention provides an unexpected, new and useful method and apparatus for balancing the rotating elements of a turbine set in a dental handpiece. The invention has been described and illustrated for exemplary purposes. The scope of the invention shall be determined only by the attached claims.

## Claims

1. A method for increasing bearing life of an air-turbine dental handpiece **characterized by** balancing a set of rotating turbine elements in a dental handpiece reducing for static and couple imbalance on a bur tube (10) rotor assembly, wherein the rotating bur tube having a rotation axis, the bur tube having a bur receiving end and an opposite cap end, comprising the steps of:

    (a) measuring both static imbalance and couple imbalance in the rotating elements;
    (b) adding or removing material from at least two correction planes (11,12) in the turbine set at an angular location measured during the imbalance measurement for at least partially correcting each of said static imbalance and said couple imbalance; and, if necessary,
    (c) repeating said steps of measuring and removing until a predetermined balance is achieved;

    wherein said two correction planes are perpendicular to the rotation axis of the bur tube, and wherein a first (12) of said two correction planes intersects the bur tube near the bur receiving end, and a second (11) of said two correction planes intersects the bur tube near the cap end.

**Patentansprüche**

1. Verfahren zur Verlängerung der Lebensdauer eines Lagers eines dentalen Luftdruckhandstücks, **gekennzeichnet durch** ein Ausbalancieren von rotierenden Turbinenelementen in einem dentalen Handstück zur Verminderung von statischen und Kupplungsungleichgewichten eines Rotoraufbaus mit Bohrerhülse (10), wobei die Bohrerhülse eine Rotationsachse aufweist, wobei die Bohrerhülse ein Schaftempfangendes Ende und ein gegenüberliegendes Kappenende aufweist, umfassend die Schritte:

   (a) Messung von sowohl statischen Ungleichgewichten als auch Kupplungsungleichgewichten der rotierenden Elemente;
   (b) Hinzufügen oder Entnehmen von Material aus mindestens zwei Korrekturebenen (11, 12) der Turbine in einer Winkelposition, gemessen während der Ungleichgewichtsmessung, um mindestens teilweise jedes der statischen Ungleichgewichte und der Kupplungsungleichgewichte zu korrigieren; sowie, falls erforderlich
   (c) Wiederholung der Schritte einer Messung und Entnahme bis ein vorbestimmtes Gleichgewicht erzielt wird;

   wobei die beiden Korrekturebenen senkrecht auf der Rotationsachse der Bohrerhülse stehen und wobei eine erste (12) der beiden Korrekturebenen die Bohrerhülse in der Nähe des Bohrer-empfangenden Endes schneidet und eine zweite (11) der beiden Korrekturebenen die Bohrerhülse in der Nähe des Kappenendes schneidet.

**Revendications**

1. Procédé pour augmenter une durée de vie de palier d'une pièce à main dentaire pour turbine à air **caractérisé par** le fait d'équilibrer un ensemble d'éléments rotatifs de turbine dans une pièce à main dentaire réduisant un déséquilibre statique et de couple sur un ensemble rotor de tube à fraise (10), le tube à fraise rotatif ayant un axe de rotation, le tube à fraise présentant une extrémité de réception de fraise et une extrémité de capuchon opposée, comprenant les étapes consistant :

   (a) à mesurer à la fois un déséquilibre statique et un déséquilibre de couple dans les éléments rotatifs ;
   (b) à ajouter ou enlever de la matière d'au moins deux plans de correction (11, 12) dans l'ensemble turbine à un emplacement angulaire mesuré pendant la mesure de déséquilibre pour corriger au moins partiellement chacun desdits déséquilibre statique et déséquilibre de couple ; et, si nécessaire,
   (c) à répéter lesdites étapes de mesure et d'enlèvement jusqu'à l'obtention d'un équilibre prédéterminé ;

   où lesdits deux plans de correction sont perpendiculaires à l'axe de rotation du tube à fraise, et où un premier plan (12) desdits deux plans de correction coupe le tube à fraise à proximité de l'extrémité de réception de fraise, et un deuxième plan (11) desdits deux plans de correction coupe le tube à fraise à proximité de l'extrémité de capuchon.

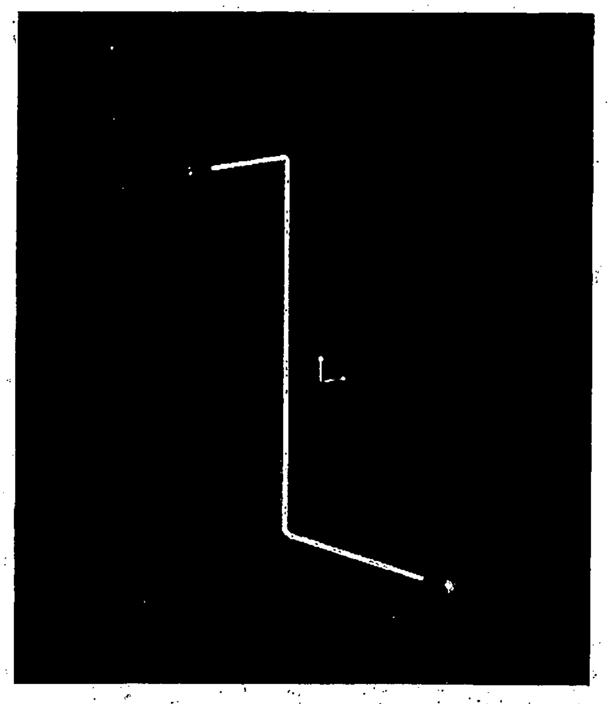

FIG. 1

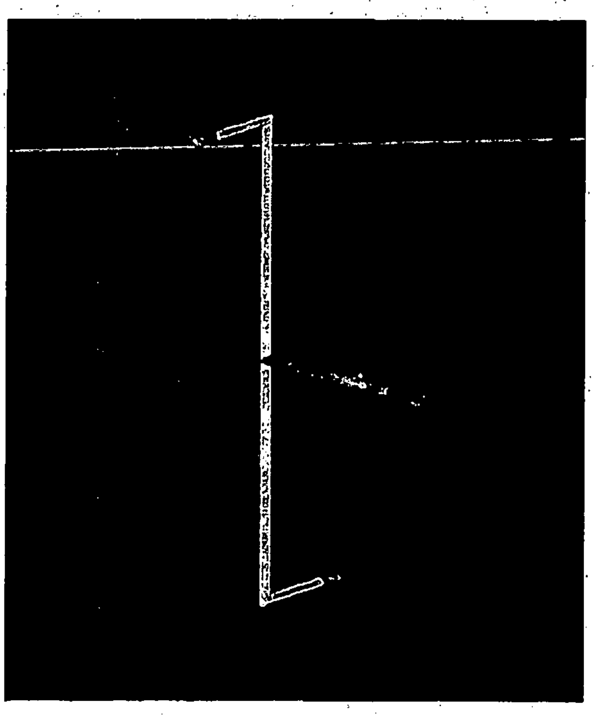

Fig. 2

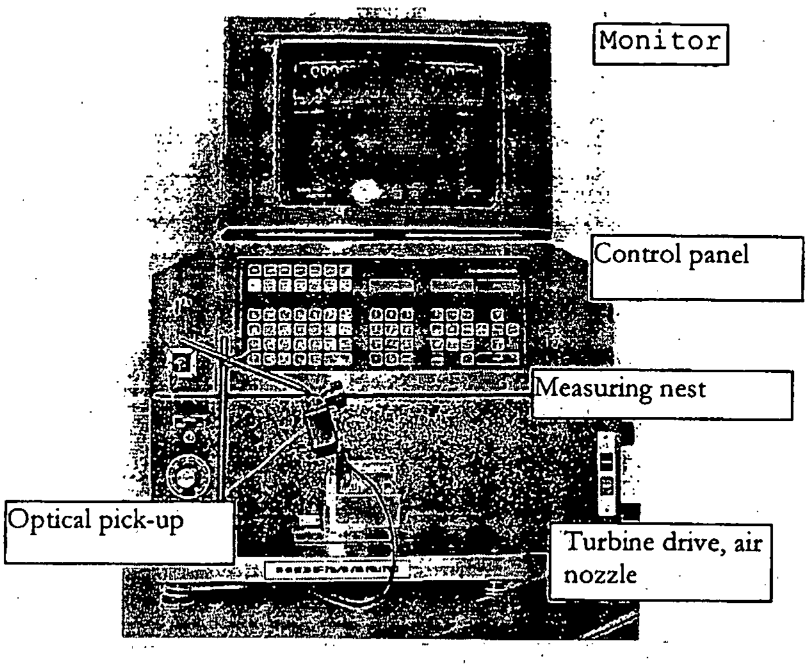
Monitor
Control panel
Measuring nest
Optical pick-up
Turbine drive, air nozzle

FIG. 3

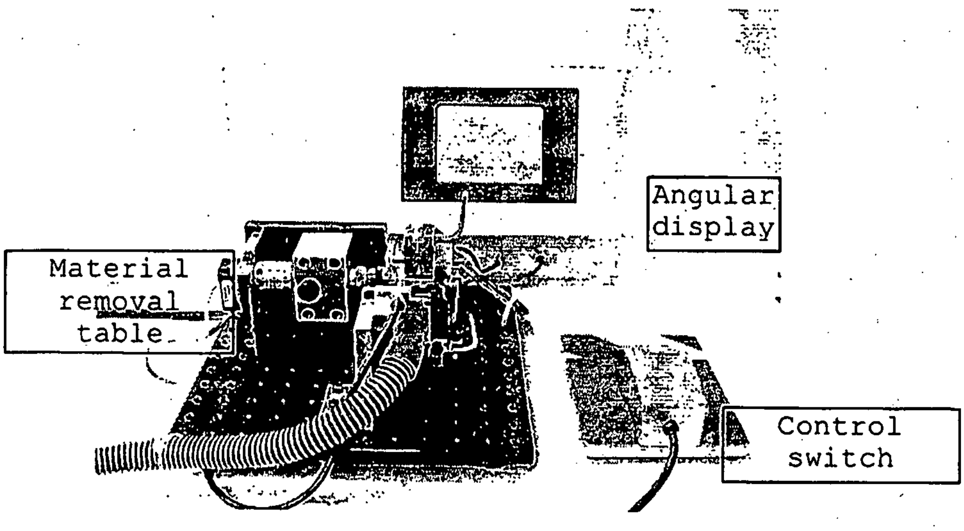
Angular display
Material removal table
Control switch

FIG. 4

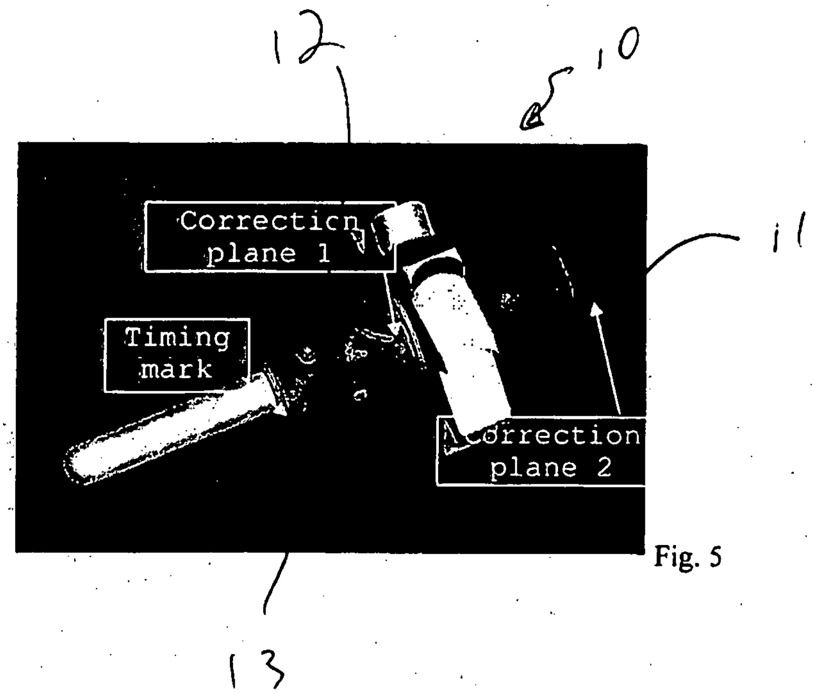
12
10
11
Correction plane 1
Timing mark
Correction plane 2
13
Fig. 5

TABLE I

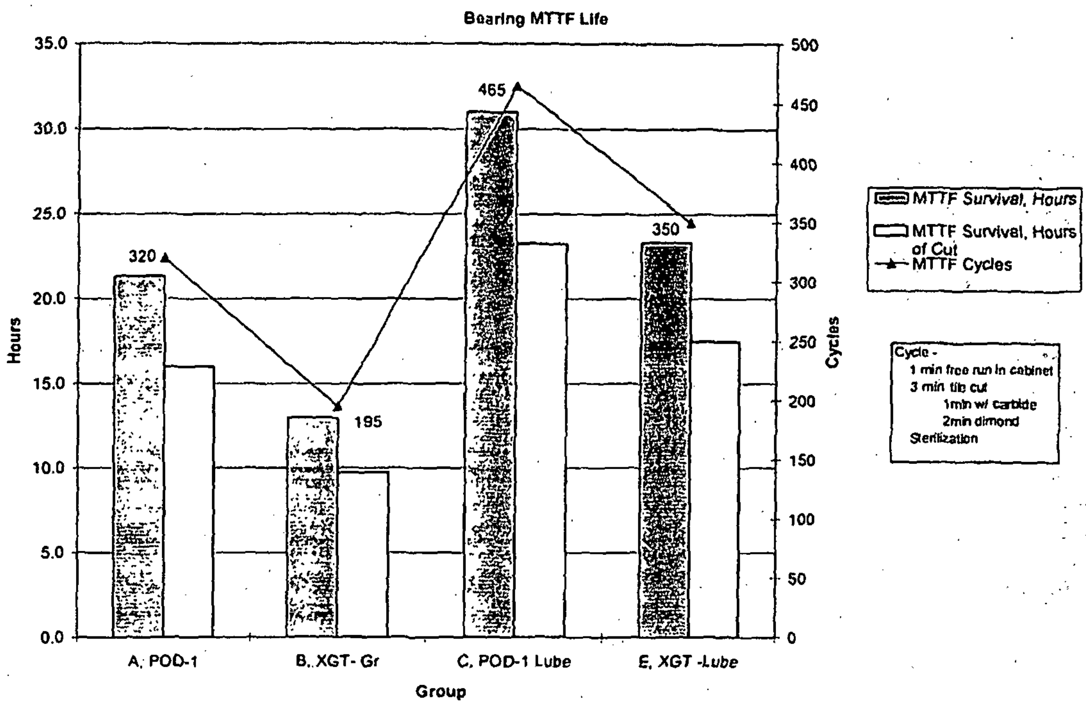


TABLE II

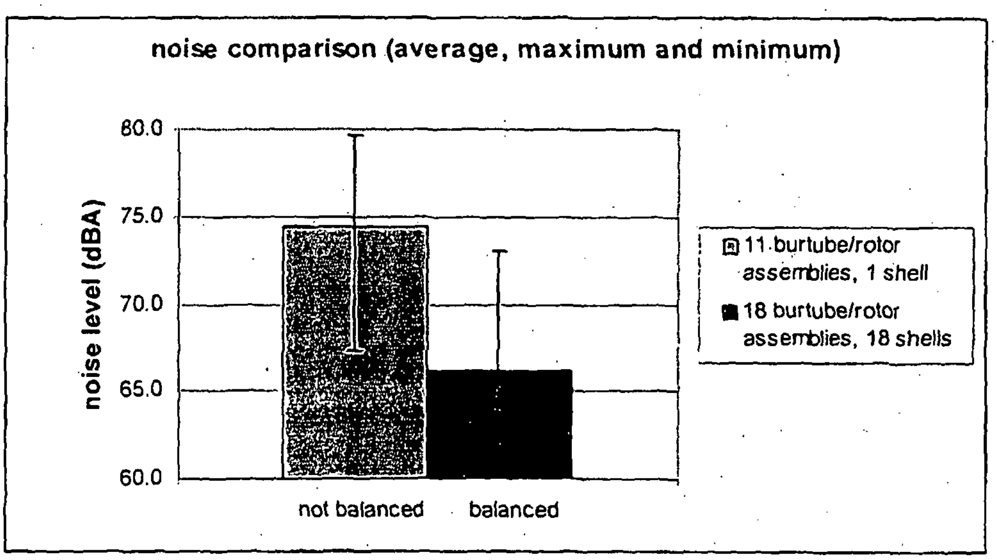

TABLE III

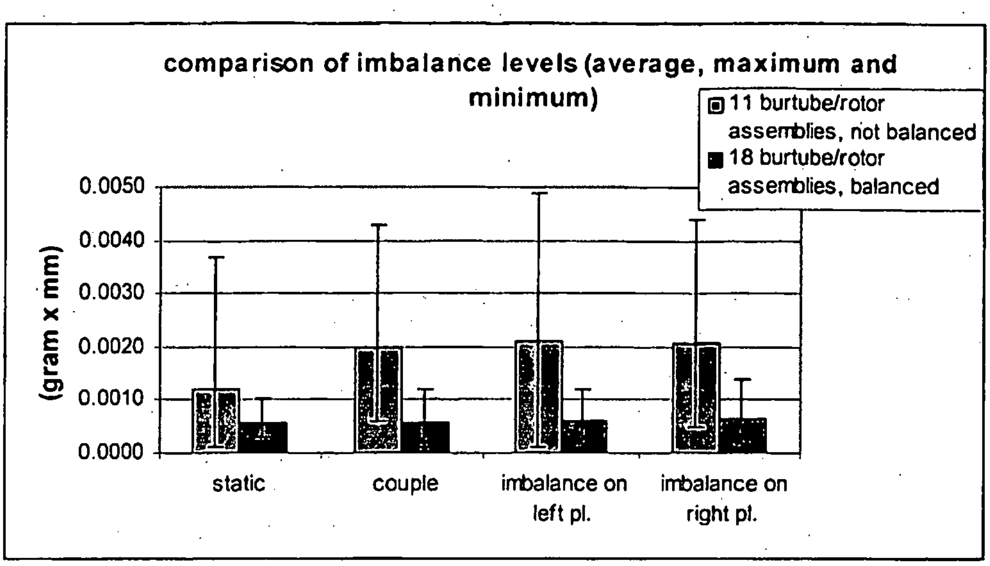
comparison of imbalance levels (average, maximum and minimum)
11 burtube/rotor assemblies, not balanced
18 burtube/rotor assemblies, balanced
(gram x mm)
0.0050
0.0040
0.0030
0.0020
0.0010
0.0000
static
couple
imbalance on left pl.
imbalance on right pl.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5040980 A
- US 4382790 A
- US 4020556 A